# EUROPEAN PATENT APPLICATION

(11) **EP 3 511 800 A1**
(43) Date of publication of application: **17.07.2019**
(21) Application number: 17848378.0
(22) Date of filing: 20.06.2017
(51) Int. Cl.: G06F 3/01, G02C 13/00, H04M 11/00

(54) **INFORMATION PROCESSING DEVICE**

(30) Priority: 08.09.2016 JP 2016175441
(71) Applicant: Sony Corporation, Tokyo 108-0075 (JP); Sony Mobile Communications Inc., Shinagawa-ku Tokyo 140-0002 (JP)
(72) Inventor: NAKAGAWA, Ayumi, Tokyo 108-0075 (JP); SAKAI, Shimon, Tokyo 108-0075 (JP); HOSOKAWA, Satoshi, Tokyo 140-0002 (JP)
(74) Representative: MFG Patentanwälte Meyer-Wildhagen Meggle-Freund Gerhard PartG mbB
(86) International application number: PCT/JP2017/022707
(87) International publication number: WO 2018/047433

(57) **Abstract**

[Object] To determine more flexibly whether or not an assistive device is worn by a user.

[Solution] Provided is an information processing apparatus including: a determination unit configured to determine whether or not an assistive device is being worn by a user; and an output control unit configured to perform control of an output mode on the basis of determination by the determination unit as to whether or not the assistive device is being worn, in which the determination unit determines whether or not the assistive device is being worn on the basis of estimated behavior of the user. In addition, provided is an information processing apparatus including: a sensor unit configured to collect information used for estimation of behavior of a user; and an output unit configured to perform information output to the user, in which the output unit performs information output corresponding to an output mode controlled on the basis of determination of whether or not an assistive device is being worn by the user, the determination being performed from information collected from the sensor unit or an external service.

## Description

### Technical Field

The present disclosure relates to an information processing apparatus.

### Background Art

Various apparatuses for image recognition have been developed recently. In addition, apparatuses that perform output control on the basis of the recognized information are developed. In one example, Patent Literature 1 discloses an image processing device that determines characteristics of eyeglasses worn by a user by image recognition and corrects the size of text or image to be output on the basis of the determination.

### Citation List

### Patent Literature

Patent Literature 1: JP 2015-25859A

### Disclosure of Invention

### Technical Problem

The image processing device disclosed in Patent Literature 1 however determines whether or not eyeglasses are worn or determines characteristics of eyeglasses on the basis of the captured user's image. Thus, in a case where the user is located outside the angle of view of an imaging apparatus, it is difficult to perform the above-described determination.

Further, the image processing device disclosed in Patent Literature 1 is effective for eyeglasses that are easy to capture its image, but it is difficult to apply to an assistive device, such as contact lens or hearing aid, that is difficult to capture its image.

In view of this, the present disclosure provides a novel and improved information processing apparatus capable of determining more flexibly whether or not an assistive device is worn by a user.

### Solution to Problem

According to the present disclosure, there is provided an information processing apparatus including: a determination unit configured to determine whether or not an assistive device is being worn by a user; and an output control unit configured to perform control of an output mode on the basis of determination by the determination unit as to whether or not the assistive device is being worn. The determination unit determines whether or not the assistive device is being worn on the basis of estimated behavior of the user.

In addition, according to the present disclosure, there is provided an information processing apparatus including: a sensor unit configured to collect information used for estimation of behavior of a user; and an output unit configured to perform information output to the user. The output unit performs information output corresponding to an output mode controlled on the basis of determination of whether or not an assistive device is being worn by the user, the determination being performed from information collected from the sensor unit or an external service.

### Advantageous Effects of Invention

As described above, according to the present disclosure, it is possible to determine more flexibly whether or not an assistive device is worn by a user.

Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating an overview and a system configuration example of an embodiment of the present disclosure.
FIG. 2 is a functional block diagram of an information processing terminal and an information processing server according to the present embodiment.
FIG. 3 is a diagram illustrated to describe behavior estimation according to the present embodiment.
FIG. 4A is a diagram illustrating an example of control of output intensity relating to visual information by the information processing server according to the present embodiment.
FIG. 4B is a diagram illustrating an example of control of output intensity relating to auditory information by the information processing server according to the present embodiment.
FIG. 5 is a diagram illustrating an example of modal control by the information processing server according to the present embodiment.
FIG. 6 is a diagram illustrated to describe transfer of output information to an external device by the information processing server according to the present embodiment.
FIG. 7 is a diagram illustrated to describe output control with priority given to a user who does not wear an assistive device by the information processing server according to the present embodiment.
FIG. 8 is a diagram illustrated to describe output control with priority given to a target user of output information by the information processing server according to the present embodiment.
FIG. 9 is a diagram illustrated to describe control of a plurality of output modes respectively corresponding to a plurality of users by the information processing server according to the present embodiment.
FIG. 10 is a diagram illustrated to describe output control based on environmental conditions by the information processing server according to the present embodiment.
FIG. 11 is a flowchart illustrating a procedure of output control by the information processing server according to the present embodiment.
FIG. 12 is a flowchart illustrating a procedure of learning by the information processing server according to the present embodiment.
FIG. 13 is a flowchart illustrating a procedure of re-learning based on feedback by the information processing server according to the present embodiment.
FIG. 14 is an example of a hardware configuration according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Moreover, the description will be given in the following order.
1. Embodiment
1.1. Introduction
1.2. Overview and system configuration example of embodiment
1.3. Functional configuration example of information processing terminal 20
1.4. Functional configuration example of information processing server 30
1.5. Details of behavior estimation
1.6. Output control based on whether or not assistive device 10 is worn
1.7. Output control relating to plurality of users
1.8. Output control based on environmental conditions
1.9. Procedure of output control
1.10. Procedure of learning
1.11. Procedure of re-learning based on feedback
2. Hardware configuration example
3. Concluding remarks

### <1. Embodiment>

### <<1.1. Introduction>>

With the development of information technology, various digital assistants have become widespread recently. The user is able to acquire various pieces of information from a large number of digital assistants in everyday life. On the other hand, in a case where a user who uses a digital assistant does not wear an assistive device such as eyeglasses, some users fail to perceive accurately information that is output from the digital assistant. Thus, in the case where the user does not wear an assistive device, it can be effective to provide, in one example, a mechanism allowing the digital assistant to correct the output size of text or image to assist the user in perceiving the information.

In this event, the processing using image recognition as disclosed in Patent Literature 1 can be assumed as a technique of determining whether or not an assistive device is worn by the user. However, the technique using image recognition as described above is difficult to determine whether or not the assistive device is worn in the case where the user is out of the angle of view of an imaging apparatus.

Further, in the case where the digital assistant is a device whose location varies every time like a small agent device, there is a possibility that a user who does not wear eyeglasses fails to find out a digital assistant.

Furthermore, the technique using image recognition is difficult to determine whether or not a small or transparent assistive device such as contact lenses or hearing aids is worn.

The technical idea according to the present disclosure is conceived focusing on the above points and is applicable to many assistive devices such as contact lenses and hearing aids in addition to eyeglasses. In addition, the technical idea according to the present disclosure makes it possible to determine whether or not a user wears an assistive device even in a case where the user is away from a digital assistant. Thus, an information processing server according to the present embodiment has functions of estimating the user's behavior from collected information and determining whether or not an assistive device is worn on the basis of the behavior.

### <<1.2. Overview and system configuration example of embodiment>>

An overview of the present embodiment is now described. As described above, in the present embodiment, it is possible to estimate the user's behavior and determine whether or not the assistive device is worn on the basis of the behavior. The users wearing the assistive device perform various behaviors in everyday life, and such behaviors have a strong correlation with whether or not the assistive device is worn. In one example, the user often removes the user's own assistive device generally when bathing or sleep. In addition, some users have a habit of removing the assistive device, in one example, when cooking, warming meals, or exercising. In the present embodiment, the learning is performed by associating the behaviors as described above with whether or not an assistive device is worn, so it is possible to determine that the user does not wear the assistive device when such behavior is estimated.

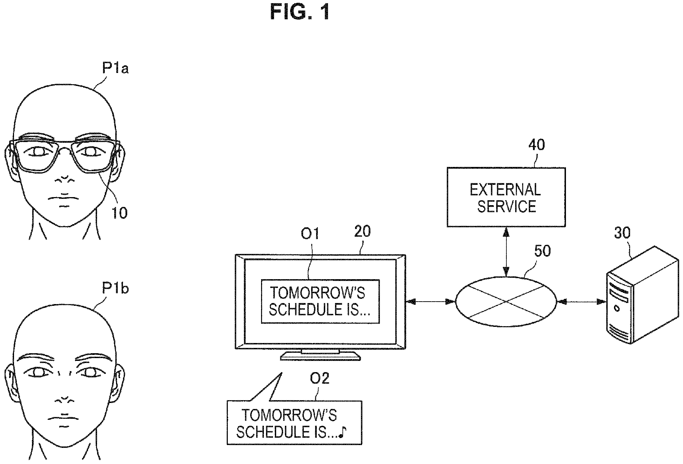

FIG. 1 is a diagram illustrating an overview and a system configuration example of the present embodiment. Referring to FIG. 1, an information processing system according to the present embodiment includes an information processing terminal 20, an information processing server 30, and an external service 40. In addition, the connection between the information processing terminal 20 and the information processing server 30 and the connection between the external service 40 and the information processing server 30 are established via a network 50 so that they can communicate with each other.

### (Assistive device 10)

Examples of an assistive device 10 according to the present embodiment include a vision correction instrument, a hearing aid instrument, a mobility aid, or the like. Examples of the above-mentioned visual correction device can include eyeglasses or contact lenses. In addition, examples of a hearing correction instrument can include a hearing aid, a sound collector, or the like. In addition, examples of the mobility aid can include a wheelchair, a walking frame, and a walking assistive cane such as crutches. In addition, the assistive device 10 according to the present embodiment can be an eyeglass-type wearable device having a visual correction function.

### (Information processing terminal 20)

The information processing terminal 20 according to the present embodiment is an information processing apparatus that presents various pieces of information to a user. Examples of the information processing terminal 20 according to the present embodiment can include a display device, a projector, various agent devices, a robot, or the like. In addition, examples of the information processing terminal 20 according to the present embodiment can include a mobile phone, a smartphone, a tablet, a personal computer (PC), or the like. The information processing terminal 20 according to the present embodiment can be implemented as various devices equipped with a function of collecting information relating to user's behavior and a function of outputting information to the user.

### (Information processing server 30)

The information processing server 30 according to the present embodiment is an information processing apparatus that estimates the user's behavior on the basis of information acquired from the information processing terminal 20 or the external service 40 and determines whether or not the assistive device 10 is worn on the basis of the estimated behavior. In addition, the information processing server 30 according to the present embodiment has a function of controlling information output by the information processing terminal 20 on the basis of the determination as to whether or not the assistive device 10 is worn.

In one example, as illustrated in FIG. 1, the information processing server 30 can determine that the user wears the eyeglass-type assistive device 10 from the estimated behavior. In this case, the information processing server 30 is capable of controlling the information processing terminal 20 in such a way that the information processing terminal 20 outputs text information O1 to a user P1a who is in a state in which the assistive device 10 is worn.

On the other hand, the information processing server 30 can determine that the user does not wear the assistive device 10 from the estimated behavior. In this case, the information processing server 30 is capable of controlling the information processing terminal 20 in such a way that the information processing terminal 20 outputs speech information O2 to a user P1b who is in a state in which the assistive device 10 is not worn. This function of the information processing server 30 according to the present embodiment makes it possible to accurately perceive information being output even in the case where the assistive device 10 is not worn.

Moreover, it is assumed, as the user's behavior estimated by the information processing server 30, that there are behavior that the user removes the assistive device 10 in a typical situation such as bathing, sleep, exercise, cooking, and meal and behavior that the user removes the assistive device 10 in individual situation. In addition, the user's behavior estimated by the information processing server 30 according to the present embodiment is not limited to the above examples, and it can be various types of behavior that the user can take.

### (External service 40)

The external service 40 according to the present embodiment can be various services for transmitting the user's behavior or the information relating to user's behavior to the information processing server 30. Examples of the external service 40 according to the present embodiment can include a schedule management application, an exercise management application, a health management application, or the like. In addition, examples of the external service 40 according to the present embodiment can include household appliances such as water heaters, lighting fixture, cooking utensils, clocks, or the like. In addition, examples of the external service 40 according to the present embodiment can include a mobile phone, a smartphone, a tablet, a PC, or the like.

### (Network 50)

The network 50 has a function of connecting between the information processing terminal 20 and the information processing server 30 and between the external service 40 and the information processing server 30. Examples of the network 50 can include a public network such as the Internet, telephone networks, or satellite communication networks and various local area networks (LANs) and wide area networks (WANs) including Ethernet (registered trademark), or the like. In addition, examples of the network 50 can include a leased line network such as Internt protocol-virtual private network (IP-VPN). In addition, examples of the network 50 can include a wireless communication network such as Wi-Fi (registered trademark) or Bluetooth (registered trademark).

The system configuration example according to the present embodiment is described above. Moreover, the above description with reference to FIG. 1 is given of the case where the information processing terminal 20 and the information processing server 30 are implemented as respective independent information processing apparatuses. However, the system configuration example according to the present embodiment is not limited to this example. The information processing terminal 20 and the information processing server 30 according to the present embodiment can be implemented as a single information processing apparatus.

On the other hand, the respective functions of the information processing terminal 20 and the information processing server 30 according to the present embodiment can be implemented by three or more information processing apparatuses. The system configuration example according to the present embodiment can be deformed flexibly depending on the quantity of information to be handled, specifications of the system, operating conditions, or the like.

### <<1.3. Functional configuration example of information processing terminal 20>>

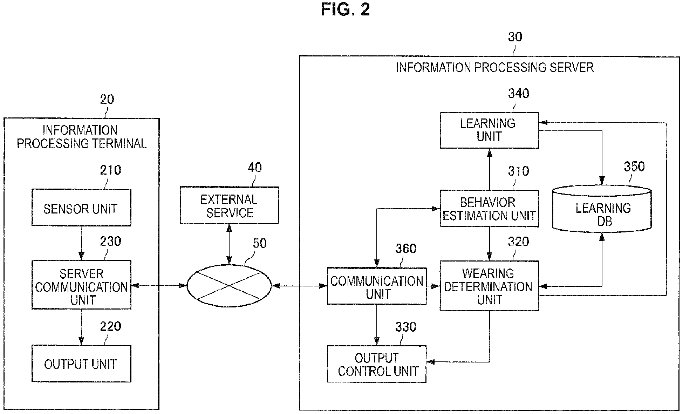

A functional configuration example of the information processing terminal 20 according to the present embodiment is now described. FIG. 2 is a functional block diagram of the information processing terminal 20 and the information processing server 30 according to the present embodiment. Referring to FIG. 2, the information processing terminal 20 according to the present embodiment includes a sensor unit 210, an output unit 220, and a server communication unit 230.

### (Sensor unit 210)

The sensor unit 210 has a function of collecting various pieces of information used for estimation of user's behavior. In one example, the sensor unit 210 can collect information relating to a user's location, distance to the user, utterance, body temperature, or installation environment. Thus, the sensor unit 210 according to the present embodiment can include, in one example, a microphone, a motion detector, a temperature sensor, an illuminance sensor, a gyro sensor, an accelerometer, a terrestrial magnetism sensor, a GPS, an image sensor, a clock, or the like.

### (Output unit 220)

The output unit 220 has a function of outputting information to the user under the control of the information processing server 30. More specifically, the output unit 220 according to the present embodiment has a function of outputting information corresponding to an output mode controlled on the basis of whether or not the assistive device 10 is worn by the user, which is determined on the basis of the information collected by the sensor unit 210 or the external service 40.

In this event, the output unit 220 can perform the information output corresponding to an output mode that is changed on the basis of the determination that the user habitually wearing an assistive device does not wear the assistive device 10.

Further, the output unit 220 has a function of outputting visual information or speech information corresponding to the above-described output mode. Thus, the output unit 220 according to the present embodiment can include a display device that outputs visual information and a speaker that outputs speech information. The display device described above can be implemented as, in one example, a cathode ray tube (CRT) display device, a liquid crystal display (LCD) device, an organic light emitting diode (OLED) device, a touch panel, a projector, or the like. In addition, the output unit 220 according to the present embodiment can have a speech synthesis function such as text-to-speech (TTS).

### (Server communication unit 230)

The server communication unit 230 has a function of performing information communication with the information processing server 30. More specifically, the server communication unit 230 according to the present embodiment transmits various types of sensor information collected by the sensor unit 210 to the information processing server 30. In addition, the server communication unit 230 according to the present embodiment receives, from the information processing server 30, a control signal corresponding to the output mode decided on the basis of whether or not the assistive device 10 is worn, which is determined on the basis of the estimated behavior.

The functional configuration example of the information processing terminal 20 according to the present embodiment is described above. Moreover, the functional configuration described above is merely an example, and the functional configuration of the information processing terminal 20 according to the present embodiment is not limited to this example. The information processing terminal 20 according to the present embodiment can further include a component for implementing various functions of the information processing server 30. In one example, the information processing terminal 20 can include some or all of a behavior estimation unit 310, a wearing determination unit 320, an output control unit 330, a learning unit 340, and a learning DB 350, which will be described later. The functional configuration of the information processing terminal 20 according to the present embodiment can be flexibly deformed.

### <<1.4. Functional configuration example of information processing server 30>>

A functional configuration example of the information processing server 30 according to the present embodiment is now described. Referring to FIG. 2, the information processing server 30 according to the present embodiment includes the behavior estimation unit 310, the wearing determination unit 320, the output control unit 330, the learning unit 340, the learning DB 350, and a communication unit 360.

### (Behavior estimation unit 310)

The behavior estimation unit 310 has a function of estimating the behavior or state of the user on the basis of the information acquired from the information processing terminal 20 or the external service 40. Specifically, the behavior estimation unit 310 according to the present embodiment is capable of estimating the user's behavior on the basis of the user's utterance collected by the sensor unit 210 of the information processing terminal 20. In one example, the behavior estimation unit 310 can estimate the user's behavior relating to bathing on the basis of the user's utterance "Well, going to take a bath". This function of the behavior estimation unit 310 according to the present embodiment makes it possible to determine whether or not the user wears the assistive device 10 even in the case where the user is not located within the angle of view of an image sensor.

Further, the behavior estimation unit 310 according to the present embodiment is capable of estimating the user's behavior on the basis of the information acquired from the external service 40. In one example, the behavior estimation unit 310 can estimate the user's behavior relating to bathing on the basis of the fact that the water heater starts or ends filling the bath with hot water. This function of the behavior estimation unit 310 according to the present embodiment makes it possible to estimate the user's behavior with higher accuracy.

Furthermore, the behavior estimation unit 310 according to the present embodiment is capable of estimating the user's behavior on the basis of the sensor information acquired from the information processing terminal 20 or the assistive device 10. The behavior estimation unit 310 can estimate the user's behavior relating to bathing, in one example, on the basis of detection of the rise in temperature of the user by the information processing terminal 20 or detection of the user's location by a motion detector installed in the bathroom. This function of the behavior estimation unit 310 according to the present embodiment makes it possible to estimate the user's behavior from various conditions. Moreover, the details of behavior estimation according to the present embodiment will be described separately in detail.

### (Wearing determination unit 320)

The wearing determination unit 320 has a function of determining whether or not the assistive device 10 is worn by the user. In this event, the wearing determination unit 320 according to the present embodiment is capable of determining whether or not the assistive device 10 is worn on the basis of the user's behavior estimated by the behavior estimation unit 310. This function of the wearing determination unit 320 according to the present embodiment makes it possible to determine whether or not the assistive device 10 is worn, even in a case where the user is not located within the angle of view of the image sensor or a case where it is difficult to capture the assistive device 10.

Further, the wearing determination unit 320 according to the present embodiment can determine that the user does not wear the assistive device 10 on the basis of the estimation of behavior of the user learned in association with the state where the assistive device 10 is not worn. This function of the wearing determination unit 320 according to the present embodiment makes it possible to determine with higher accuracy the correlation between the behavior and whether or not the assistive device 10 is worn for each user. Moreover, details of the wearing determination according to the present embodiment will be described separately in detail.

### (Output control unit 330)

The output control unit 330 has a function of controlling the output mode of information output by the information processing terminal 20 on the basis of the determination as to whether or not the assistive device 10 is worn by the wearing determination unit 320. More specifically, the output control unit 330 according to the present embodiment is capable of changing the output mode on the basis of the determination that the user who habitually wears the assistive device 10 does not wear the assistive device 10 by the wearing determination unit 320. This function of the output control unit 330 according to the present embodiment makes it possible to assist the user who does not wear the assistive device 10 to perceive the output information.

More specifically, the output control unit 330 according to the present embodiment is capable of controlling the output intensity relating to the information output on the basis of the determination that the user does not wear the assistive device 10 by the wearing determination unit 320. In one example, the output control unit 330 can cause the size of text or image that is output from the information processing terminal 20 to be enlarged. In addition, in one example, the output control unit 330 can cause the volume of speech information to be output by the information processing terminal 20 to be raised. This function of the output control unit 330 according to the present embodiment makes it possible to improve significantly the possibility that the user who does not wear the assistive device 10 is able to perceive the output information.

Further, the output control unit 330 according to the present embodiment can change a modal relating to the information output of the information processing terminal 20 on the basis of the determination that the user does not wear the assistive device 10 by the wearing determination unit 320. In one example, the output control unit 330 is capable of causing speech information instead of text information to be output to the user who does not wear eyeglasses and is capable of causing text information instead of speech information to be output to the user who does not wear a hearing aid. This function of the output control unit 330 according to the present embodiment makes it possible for the user to perceive the output information accurately even in the case where the user does not wear the assistive device 10.

Further, the output control unit 330 according to the present embodiment can transfer output information to an external device on the basis of the determination that the user does not wear the assistive device 10 by the wearing determination unit 320. In one example, in a case where it is determined by the wearing determination unit 320 that the user does not wear eyeglasses, the output control unit 330 is capable of transferring visual information to be output by the information processing terminal 20 to an external device such as a smartphone held by the user. This function of the output control unit 330 according to the present embodiment makes it possible to improve further the possibility that a user who does not wear the assistive device 10 is able to perceive the output information. Moreover, details of the output control according to the present embodiment will be described separately in detail.

### (Learning unit 340)

The learning unit 340 has a function of performing learning by associating the user's behavior estimated by the behavior estimation unit 310 with whether or not the user wears the assistive device 10. In this event, the learning unit 340 can perform the learning by associating the user's behavior with whether or not the assistive device 10 is worn, in one example, on the basis of an image of the user captured by the image sensor or the user's explicit input as to whether or not the user is wearing. The learning unit 340 is capable of performing the learning, in one example, by using machine learning techniques or statistical techniques such as support vector machines (SVMs), neural networks, regression models, or the like.

Further, the learning unit 340 can have a function of performing re-learning relating to the behavior and whether or not the assistive device 10 is worn, on the basis of feedback by the user for the output information. This function of the learning unit 340 according to the present embodiment makes it possible, in one example, to personalize a learning result based on general knowledge for each user to perform learning with higher accuracy. In addition, the learning unit 340 according to the present embodiment has a function of causing the data relating to the learning to be stored in the learning DB 350.

### (Learning DB 350)

The learning DB 350 has a function of storing the learning data relating to the correlation between the user's behavior and whether or not the assistive device 10 is worn. The learning DB 350 can store the correlation intensity between the user's behavior and whether or not the assistive device 10 is worn or can store various types of information used in estimating the behavior in association with each other.

### (Communication unit 360)

The communication unit 360 has a function of performing information communication with the information processing terminal 20 or the external service 40. Specifically, the communication unit 360 according to the present embodiment has a function of receiving user's utterance information or sensor information from the information processing terminal 20. In addition, the communication unit 360 has a function of receiving information used for estimation of user's behavior from the external service 40 or the assistive device 10. In addition, the communication unit 360 has a function of transmitting an output control signal generated by the output control unit 330 to the information processing terminal 20.

The functional configuration example of the information processing server 30 according to the present embodiment is described above. Moreover, the functional configuration described above is merely an example, and the functional configuration of the information processing server 30 according to the present embodiment is not limited to this example. As described above, some or all of the components included in the information processing server 30 according to the present embodiment can be implemented as functions of the information processing terminal 20. In addition, some of the respective components included in the information processing server 30 can be implemented as functions of another device. In one example, the learning unit 340 or the learning DB 350 can be implemented as functions of another device different from the information processing server 30. The functional configuration of the information processing server 30 according to the present embodiment can be deformed flexibly.

### <<1.5. Details of behavior estimation>>

The behavior estimation according to the present embodiment is now described in detail. As described above, the information processing server 30 according to the present embodiment has a function of estimating the user's behavior on the basis of the acquired various pieces of information. The information processing server 30 according to the present embodiment is capable of estimating the user's behavior on the basis of the user's utterance information, the information acquired from the external service 40, and the sensor information acquired by the information processing terminal 20 or the assistive device 10. The behavior estimation according to the present embodiment is now described in detail while giving a specific example.

### (Behavior estimation based on user utterance)

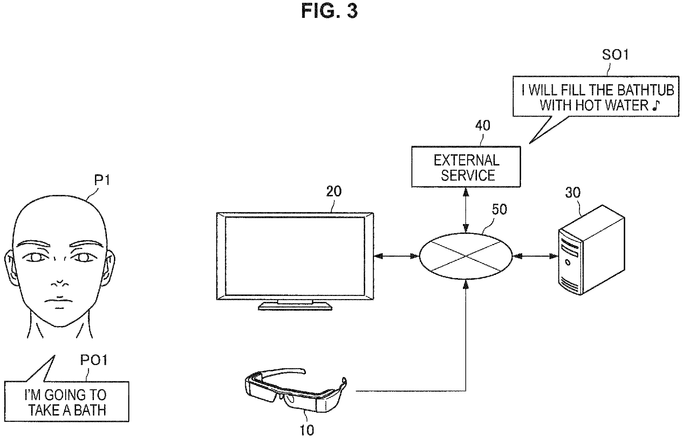

The behavior estimation based on the user utterance according to the present embodiment is first described. The information processing server 30 according to the present embodiment is capable of estimating the user's behavior on the basis of utterance information collected by the information processing terminal 20. FIG. 3 is a diagram illustrated to describe the behavior estimation according to the present embodiment.

FIG. 3 shows a user P1 who does not wear the assistive device 10 and user utterance PO1 "I'm going to take a bath". The information processing terminal 20 according to the present embodiment can detect the user utterance PO1 as illustrated in FIG. 3 and transmit the related information to the information processing server 30. In a case of the example illustrated in FIG. 3, the information processing server 30 is capable of estimating the user's behavior relating to bathing on the basis of the received information.

The information processing server 30 according to the present embodiment can similarly estimate the user's behavior relating to bathing, in one example, on the basis of utterance "Bath was good" or estimate the user's behavior relating to sleep on the basis of utterance "Well, it's time to sleep".

Further, in the case where the assistive device 10 is a hearing aid, a sound collector, or the like, it is assumed that the user wears the assistive device 10 when the user is uttering. Thus, the information processing server 30 according to the present embodiment can estimate the user's utterance itself as behavior.

### (Behavior estimation based on information acquired from external service 40)

The behavior estimation based on information acquired from the external service 40 according to the present embodiment is now described. The information processing server 30 according to the present embodiment is capable of estimating the user's behavior on the basis of the information acquired from the external service 40. FIG. 3 illustrates an example of a case where the external service 40 is a water heater. In this event, the information processing server 30 can receive information relating to the start or end of filling hot water from the external service 40 via the network 50. The information processing server 30 is capable of estimating the user's behavior relating to bathing on the basis of the received information.

Further, the information processing server 30 does not necessarily acquire the information of the external service 40 only via the network 50. The information processing server 30 is also capable of estimating the user's behavior, in one example, on the basis of detection of a speech output SO1 by the external service 40 as illustrated in FIG. 3. In this event, the information processing terminal 20 can transmit information of the detected speech output SO1 given by the external service 40 to the information processing server 30.

Further, although FIG. 3 illustrates an example of the case where the external service 40 is a water heater, the external service 40 according to the present embodiment is not limited to this example. The external service 40 according to the present embodiment can be a behavior management application. In this case, the information processing server 30 can estimate the user's behavior relating to study, in one example, on the basis of user's schedule information acquired from the behavior management application. This function of the information processing server 30 allows for performing the learning of, in one example, the fact that the user tends to wear the assistive device 10 when studying.

Further, the external service 40 according to the present embodiment can be an exercise management application. In this case, the information processing server 30 can estimate the user's behavior relating to exercise on the basis of exercise schedule information acquired from the exercise management application. This function of the information processing server 30 allows for performing the learning of, in one example, the fact that the user tends to remove the assistive device 10 when exercising.

Further, the external service 40 according to the present embodiment can be a health management application. In this case, the information processing server 30 can estimate the user's state on the basis of the user's health condition acquired from the health management application. In one example, the information processing server 30 is capable of acquiring, in one example, information indicating that the user is receiving treatment relating to the eyes and ears from the health management application. This function of the information processing server 30 allows for performing the learning of, in one example, the fact that the user tends to removes the assistive device 10 when receiving treatment related to eyes and ears.

Further, the external service 40 according to the present embodiment can be a household appliance such as lighting fixtures. In this case, the information processing server 30 is also capable of estimating the user's behavior relating to sleep on the basis of the acquisition of information relating to turning-off of the lighting fixture via the network 50. Alternatively, the information processing server 30 can estimate that the user is in sleep state on the basis of the detection of turning-off of the lighting fixture by an illuminance sensor of the sensor unit 210 of the information processing terminal 20.

Further, the external service 40 according to the present embodiment can be a device such as smartphones, tablets, or PCs. In this case, the information processing server 30 is capable of estimating the user's behavior on the basis of a search history of the user acquired from the device as described above. In one example, the information processing server 30 is capable of estimating the user's behavior relating to cooking or meal from a cooking recipe history searched by the user. This function of the information processing server 30 allows for performing the learning of, in one example, the fact that the user tends to remove the assistive device 10 when having a hot meal.

### (Behavior estimation based on sensor information)

The behavior estimation based on sensor information according to the present embodiment is now described. The information processing server 30 according to the present embodiment is capable of estimating the user's behavior on the basis of sensor information collected by the information processing terminal 20, the assistive device 10, or a separately installed sensor device.

In one example, the information processing server 30 is capable of estimating the user's behavior relating to bathing on the basis of the detection of rise in temperature of the user by the information processing terminal 20. In addition, in one example, the information processing server 30 can estimate the movement of the user approaching the information processing terminal 20 or the operation of the information processing terminal 20 by the user on the basis of the sensor information collected by the information processing terminal 20. This function of the information processing server 30 allows for performing the learning of, in one example, the fact that there are many situations where the user removes the assistive device 10, in a case where the user approaches the information processing terminal 20, a case where the user is groping for the information processing terminal 20, or other cases.

Further, the information processing server 30 can estimate the user's behavior on the basis of the sensor information collected by the assistive device 10. In one example, in the case where the assistive device 10 is an eyeglass-type wearable device, the information processing server 30 is capable of estimating the state in which the user removes the assistive device 10 on the basis of the information of an accelerometer or gyro sensor, which is acquired from the assistive device 10. In addition, the information processing server 30 is also capable of performing the estimation on the basis of the fact that the sensor information indicating that the assistive device 10 such as wearable devices or hearing aids is being charged is acquired from a charger or the assistive device 10.

Further, the information processing server 30 is capable of estimating the user's behavior on the basis of the sensor information collected by a separately installed sensor device. The information processing server 30 can estimate the user's behavior relating to bathing, in one example, on the basis of detection of the location of the user by a motion detector installed in the bathroom.

The behavior estimation according to the present embodiment is described above while giving a specific example. As described above, the information processing server 30 according to the present embodiment is capable of estimating the user's behavior on the basis of the acquired various pieces of information. This function of the information processing server 30 according to the present embodiment makes it possible to perform the learning by correlating the user's behaviors with whether or not the user wears the assistive device 10 or to determine whether or not the assistive device 10 is worn from the user's behavior on the basis of the learning result.

### <<1.6. Output control based on whether or not assistive device 10 is worn>>

The output control based on whether or not the assistive device 10 is worn according to the present embodiment is now described. As described above, the information processing server 30 according to the present embodiment has a function of determining whether or not the assistive device 10 is worn from the estimated user's behavior and controlling the output mode of the information processing terminal 20 on the basis of the determination.

Specifically, in the case where the information processing server 30 according to the present embodiment determines that the user does not wear the assistive device 10, the information processing server 30 is capable of changing the output intensity or the modal relating to the information output. In addition, in the case where the information processing server 30 according to the present embodiment determines that the user does not wear the assistive device 10, the information processing server 30 is capable of transferring the output information to the external device.

### (Control of output intensity)

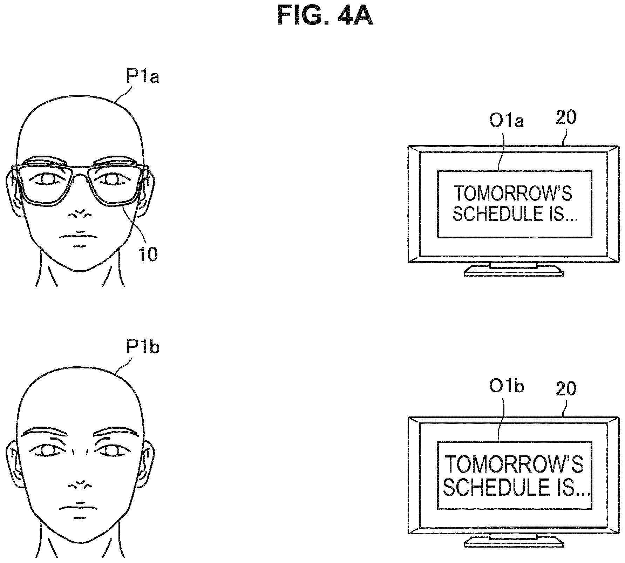

The control of the output intensity by the information processing server 30 according to the present embodiment is first described. FIG. 4A is a diagram illustrating an example of control of the output intensity relating to the visual information by the information processing server 30. In FIG. 4A, the upper part shows a user P1a who wears the eyeglass-type assistive device 10 and shows visual information O1a that is output by the information processing terminal 20. Here, the visual information O1a illustrated in FIG. 4A can be output with the normal font size that is set. In other words, in the case where the information processing server 30 according to the present embodiment determines that the user wears the assistive device 10, the information processing server 30 causes the information processing terminal 20 to output the visual information of normal size.

On the other hand, in FIG. 4A, the lower part shows a user P1b who does not wear the assistive device 10 and shows visual information O1b that is output by the information processing terminal 20. Here, when comparing the visual information O1a and the visual information O1b, it can be found that the visual information O1b is output with a font size larger than that of the visual information O1a. As described above, in the case where the information processing server 30 according to the present embodiment determines that the user does not wear the assistive device 10, the information processing server 30 causes the information processing terminal 20 to output the visual information with a size larger than usual. In one example, in a case where the user does not wear eyeglasses, the information processing server 30 can perform control such as increasing the subtitle size of the signage or moving image being played back by the information processing terminal 20.

This function of the information processing server 30 according to the present embodiment makes it possible to improve significantly the possibility that the user is able to perceive the visual information even in the case where the user does not wear the eyeglasses.

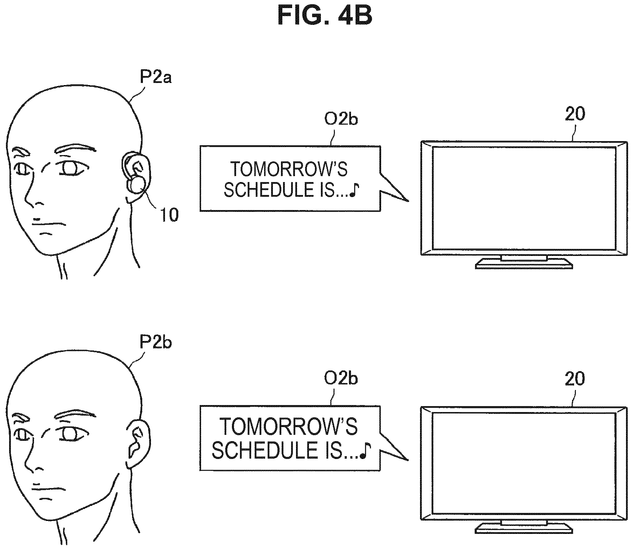

Further, the information processing server 30 according to the present embodiment can control the output intensity relating to auditory information. FIG. 4B is a diagram illustrating an example of control of the output intensity relating to the auditory information by the information processing server 30. In FIG. 4B, the upper part shows a user P2a who wears a hearing aid-type assistive device 10 and auditory information O2a that is output by the information processing terminal 20. Here, the auditory information O1a shown in FIG. 4B can be output with the normal volume that is set. In other words, in the case where the information processing server 30 according to the present embodiment determines that the user wears the assistive device 10, the information processing server 30 causes the information processing terminal 20 to output the auditory information of the normal volume.

On the other hand, in FIG. 4B, the lower part shows a user P2b who does not wear the assistive device 10 and auditory information O2b that is output from the information processing terminal 20. Here, when comparing the auditory information O2a and the auditory information O2b, it can be found that the auditory information O2b is output at a volume higher than the auditory information O2a. As described above, in the case where the information processing server 30 according to the present embodiment determines that the user does not wear the assistive device 10, the information processing server 30 causes the information processing terminal 20 to output the auditory information at a volume higher than usual. This function of the information processing server 30 according to the present embodiment makes it possible to improve significantly the possibility that the user is able to perceive the auditory information even in the case where the user does not wear the hearing aid.

### (Control of modal)

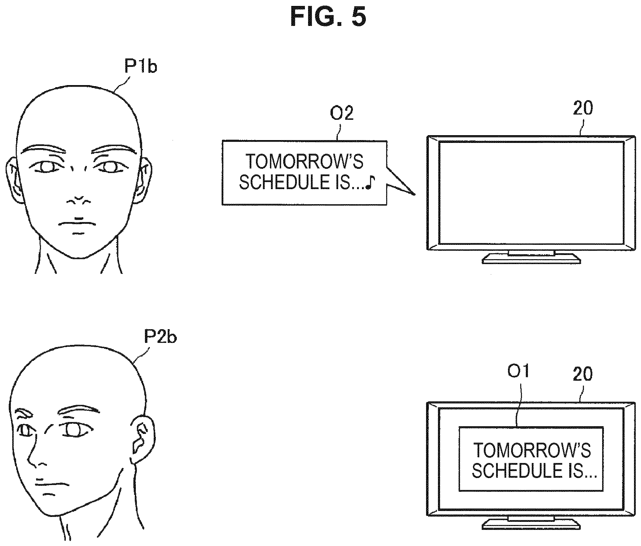

The modal control by the information processing server 30 according to the present embodiment is now described. FIG. 5 is a diagram illustrating an example of modal control by the information processing server 30. In FIG. 5, the upper part shows a user P1b who does not wear the eyeglass-type assistive device 10 and auditory information O2 that is output by the information processing terminal 20. As described above, in the case where the information processing server 30 according to the present embodiment determines that the user who wears eyeglasses habitually does not wear eyeglasses, the information processing server 30 is capable of causing the information processing terminal 20 to output auditory information, instead of the visual information that is output in the normal mode. In one example, in the case where the user does not wear eyeglasses, the information processing server 30 can perform control to switch the moving image played back by the information processing terminal 20 from the subtitle to the supplementary audio.

This function of the information processing server 30 according to the present embodiment makes it possible to perform information output using the speech information in the case where the user does not wear eyeglasses, thereby enhancing significantly the possibility that the user can perceive the output information.

On the other hand, in FIG. 5, the lower part shows a user P2b who does not wear the hearing aid-type assistive device 10 and visual information O1 that is output by the information processing terminal 20. As described above, the information processing server 30 according to the present embodiment, when determining that the user who wears the hearing aid habitually does not wear the hearing aid, is capable of causing the information processing terminal 20 to output the visual information instead of the auditory information that is output in the normal mode.

This function of the information processing server 30 according to the present embodiment makes it possible to perform the information output using the auditory information in the case where the user does not wear a hearing aid, thereby enhancing significantly the possibility that the user is able to perceive the output information.

### (Transfer of output information to external device)

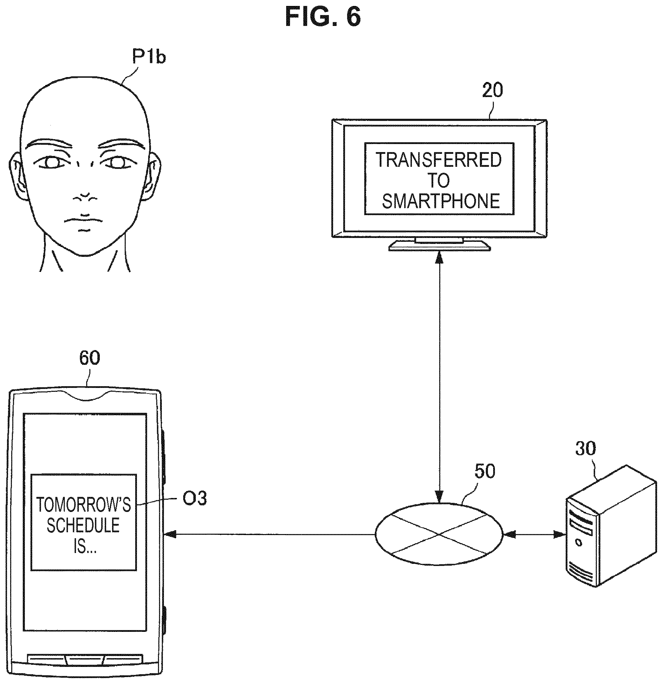

The transfer of output information to the external device according to the present embodiment is now described. FIG. 6 is a diagram illustrated to describe the transfer of output information to an external device 60 from the information processing server 30. Examples of the external device 60 according to the present embodiment can include a mobile phone, a smartphone, a tablet, a PC, or the like held by the user. FIG. 6 shows a user P1b who does not wear the eyeglass-type assistive device 10 and output information O3 that is transferred to the external device 60. As described above, the information processing server 30 according to the present embodiment, when determining that the user who wears eyeglasses habitually does not wear eyeglasses, is capable of transferring output information, which is to be output to the information processing terminal 20, to an external device 60. This function of the information processing server 30 according to the present embodiment makes it possible for the user to check the output information using the external device 60 located at hand, thereby improving significantly the possibility that the user is able to perceive the output information.

Moreover, the transfer of the output information to the external device 60 can be executed by the information processing terminal 20. In this case, the information processing server 30 can transmit a control signal used to instruct the information processing terminal 20 to transfer the output information. In addition, in the example illustrated in FIG. 6, a message indicating that the output information has been transferred to the external device 60 is displayed on the information processing terminal 20, but the output information transferred to the external device 60 can be simultaneously output by the information processing terminal 20. In addition, FIG. 6 illustrates an example where the information processing server 30 transfers the visual information, but the information processing server 30 can transfer the auditory information to the external device 60.

### <<1.7. Output control relating to plurality of users>>

The output control for a plurality of users according to the present embodiment is now described. The above description is given, as an example, of the case where the information processing server 30 determines whether or not the assistive device 10 is worn by a single user and performs the output control based on the determination. On the other hand, the information processing server 30 according to the present embodiment is capable of determining whether or not the assistive device 10 is worn for a plurality of users and is also capable of performing the output control based on the determination. The output control for the plurality of users by the information processing server 30 is now described while giving a specific example.

### (Priority given to user who does not wear assistive device 10)

An example of output control with priority given to a user who does not wear the assistive device 10 by the information processing server 30 according to the present embodiment is first described. In the case where the wearing determination unit 320 determines whether or not the assistive device 10 is worn for a plurality of users, the output control unit 330 of the information processing server 30 according to the present embodiment is capable of changing the output mode on the basis of the determination that a user who does not wear the assistive device 10 is present.

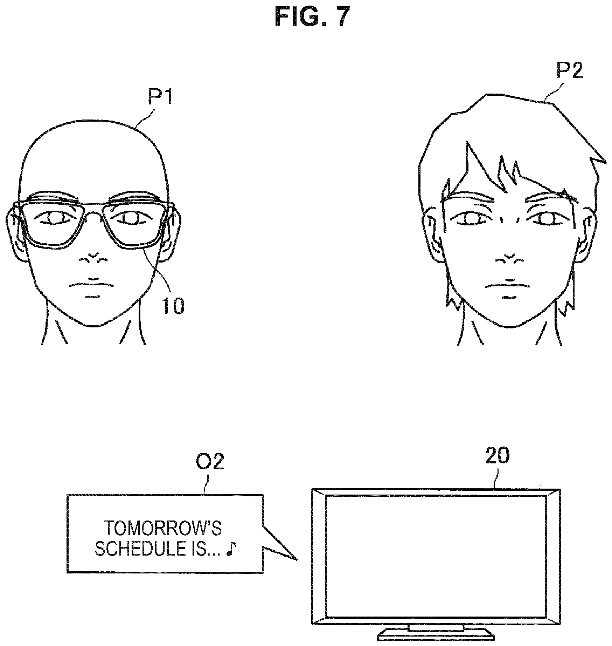

FIG. 7 is a diagram illustrated to describe output control with priority given to a user who does not wear the assistive device 10 by the information processing server 30. FIG. 7 shows a user P1 who wears the eyeglass-type assistive device 10, a user P2 who does not wear the assistive device 10, and auditory information O2 that is output by the information processing terminal 20.

As described above, the information processing server 30 according to the present embodiment can output the auditory information, instead of visual information that is output in the normal mode, in such a way that the user P2 who does not wear eyeglasses is able to perceive the output information. In other words, the information processing server 30 according to the present embodiment is capable of determining whether or not the assistive device 10 is worn for a plurality of users and performing output control with priority given to the user who does not wear the assistive device 10.

This function of the information processing server 30 according to the present embodiment makes it possible, even in a case where a user who wears the assistive device 10 and a user who does not wear the assistive device 10 are all present, to enhance significantly the possibility that both users are able to perceive the output information.

Moreover, although FIG. 7 illustrates the case where the information processing server 30 controls the modal relating to the information output as an example, the information processing server 30 can control the output intensity relating to the information output.

### (Priority given to target user)

An example of output control with priority given to a target user by the information processing server 30 according to the present embodiment is now described. In the case where the wearing determination unit 320 determines whether or not the assistive device 10 is worn for a plurality of users, the output control unit 330 of the information processing server 30 according to the present embodiment is capable of controlling the output mode on the basis of whether or not the assistive device 10 is worn by a user as a target of the output information.

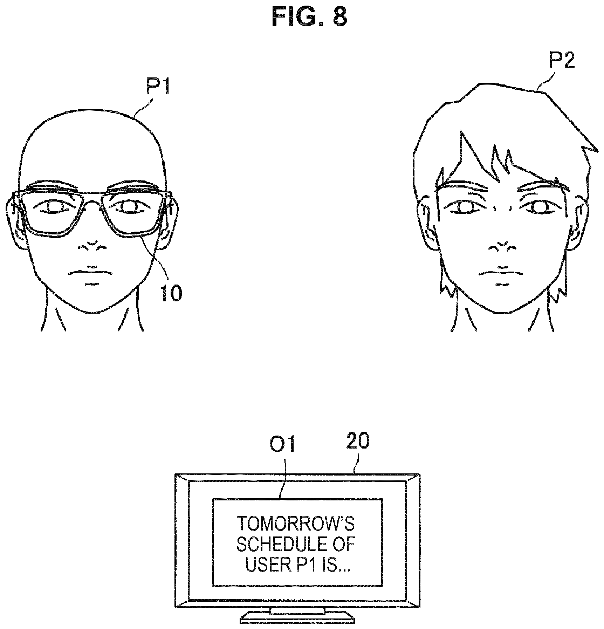

FIG. 8 is a diagram illustrated to describe the output control with priority given to the target user of the output information by the information processing server 30. FIG. 8 shows a user P1 who wears the eyeglass-type assistive device 10, a user P2 that does not wear the assistive device 10, and visual information O1 that is output by the information processing terminal 20. Here, the visual information O1 can be output information targeting the user P1.

As described above, even in the case where a user who does not wear the assistive device 10 is present, the information processing server 30 according to the present embodiment can cause the information processing terminal 20 to perform output in the normal mode when the output information is not the information targeting the user. In other words, the information processing server 30 according to the present embodiment, when determining whether or not the assistive device 10 is worn for the plurality of users, is capable of performing the output control with priority given to the target user of the output information.

This function of the information processing server 30 according to the present embodiment makes it possible to enhance the possibility that a user who demands the output information is able to correctly perceive the output information.

### (Control of plurality of output modes corresponding to plurality of users)

The control of a plurality of output modes respectively corresponding to a plurality of users according to the present embodiment is now described. In the case where the wearing determination unit 320 determines whether or not the assistive device 10 is worn for the plurality of users, the output control unit 330 of the information processing server 30 according to the present embodiment is capable of controlling the plurality of output modes respectively corresponding to the plurality of users.

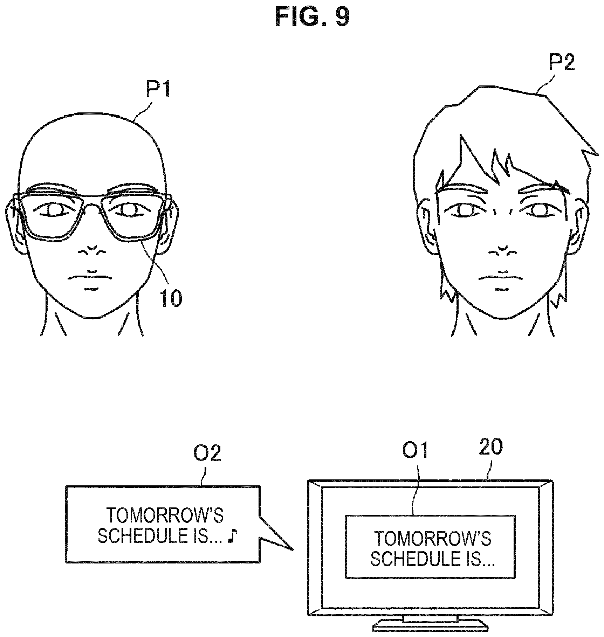

FIG. 9 is a diagram illustrated to describe control of a plurality of output modes respectively corresponding to a plurality of users by the information processing server 30. FIG. 9 shows a user P1 who wears the eyeglass-type assistive device 10, a user P2 who does not wear the assistive device 10, and visual information O1 and auditory information O2 that are output by the information processing terminal 20.

As described above, in the case where a user who does not wear the assistive device 10 and a user who wears the assistive device 10 are all present, the information processing server 30 according to the present embodiment is capable of causing the information processing terminal 20 to perform the information output corresponding to each user. In other words, the information processing server 30 according to the present embodiment causes the information processing terminal 20 to output the visual information O1 corresponding to the user P1 who wears the assistive device 10 and the auditory information O2 corresponding to the user P2 who does not wear the assistive device 10.

This function of the information processing server 30 according to the present embodiment is capable of presenting the output information suitable for each user even in the case where a user who does not wear the assistive device 10 and a user who is wearing the assistive device 10 are all present.

### <<1.8. Output control based on environmental conditions>>

The output control based on environmental conditions according to the present embodiment is now described. The above description is given of the case where the information processing server 30 according to the present embodiment changes the output mode on the basis of whether or not the user wears the assistive device 10. On the other hand, the output control unit 330 of the information processing server 30 according to the present embodiment can control the output mode on the further basis of the acquired environmental conditions.

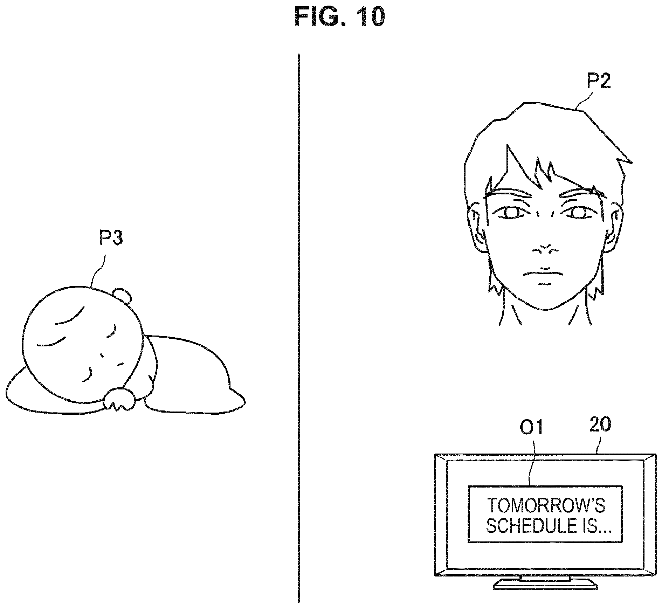

FIG. 10 is a diagram illustrated to describe output control based on environmental conditions by the information processing server 30 according to the present embodiment. FIG. 10 shows a user P2 and a third party P3 who does not wear the eyeglass-type assistive device 10 and visual information O1 that is output by the information processing terminal 20. Here, in one example, it is assumed that the third party P3 is a sleeping baby as illustrated in FIG. 10.

In this case, the information processing server 30 according to the present embodiment allows only the visual information to be output without outputting the auditory information to the information processing terminal 20 so as not to disturb sleep of the third party P3. In other words, the output control unit 330 of the information processing server 30 according to the present embodiment is capable of selecting the output mode relating to the visual information on the basis of the environmental condition indicating a request for quiet environment.

This function of the information processing server 30 according to the present embodiment makes it possible to present the output information in such a way not to interfere with a third party.

Moreover, the environmental condition according to the present embodiment can be various pieces of information acquired from the information processing terminal 20, the external service 40, the external device 60, a separately installed sensor device, or the like. The information processing server 30 is capable of estimating the behavior relating to sleep of a third party, in one example, on the basis of the detection of the location of the third party and the detection of a lighting fixture turned off in a room adjacent to the room where the information processing terminal 20 is installed. As described above, the environmental condition according to the present embodiment can include the estimated behavior of a third party. It is assumed that the behavior of the third party is study or telephone conversation in addition to sleep.

### <<1.9. Procedure of output control>>

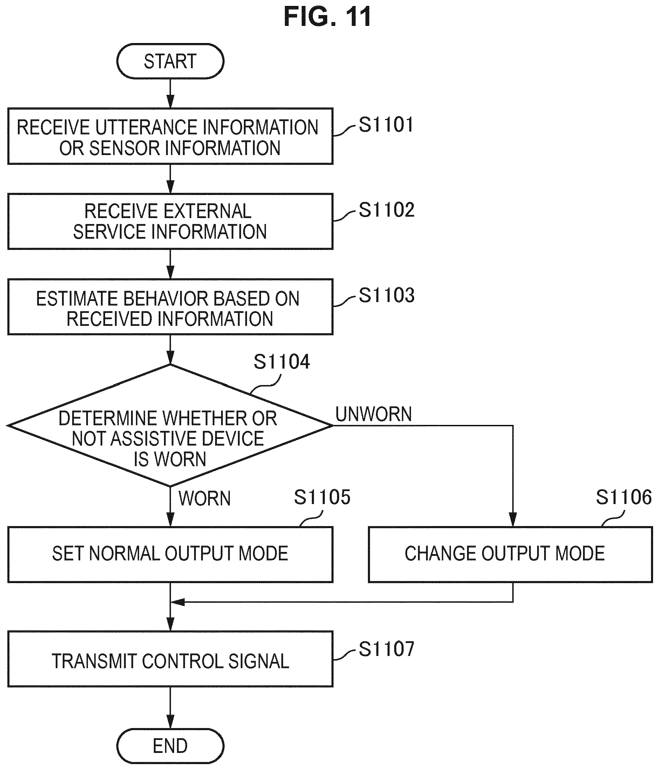

The procedure of output control by the information processing server 30 according to the present embodiment is now described. FIG. 11 is a flowchart illustrating the procedure of output control by the information processing server 30.

Referring to FIG. 11, the communication unit 360 of the information processing server 30 according to the present embodiment first receives user's utterance information or sensor information from the information processing terminal 20 or the like (S1101).

Further, the communication unit 360 receives the service information from the external service 40 (S1102). Moreover, the reception of utterance information or sensor information in step S1101 and the reception of service information in step S1102 can be performed in an order different from that illustrated in FIG. 11 or can be performed simultaneously. In addition, the reception of only one of the respective pieces information in steps S1101 and S1102 can be performed.

Then, the behavior estimation unit 310 estimates the user's behavior on the basis of the respective pieces of information received in steps S1101 and S1102 (S1103).

Then, the wearing determination unit 320 determines whether or not the assistive device 10 is worn on the basis of the user's behavior estimated in step S1103 and the learning result stored in the learning DB 350 (S1104).

Here, in the case where the wearing determination unit 320 determines that the user wears the assistive device 10 (S1104: worn), the output control unit 330 sets a normal output mode (S1105).

On the other hand, in the case where the wearing determination unit 320 determines that the user does not wear the assistive device 10 (S1104: unworn), the output control unit 330 changes the output mode (S1106).

Then, when the output mode is set in step S1105 or step S1106, the communication unit 360 transmits a control signal generated depending on the output mode to the information processing terminal 20 (S1107), and the information processing server 30 ends the series of processing.

### <<1.10. Procedure of learning>>

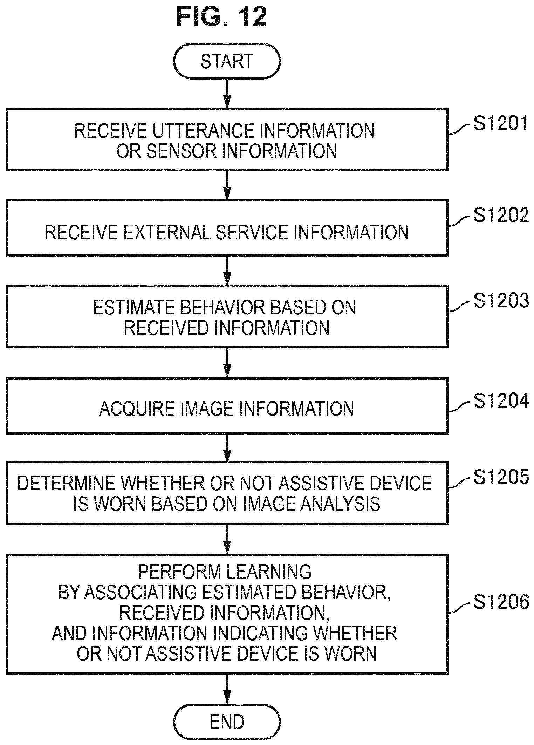

The procedure of learning by the information processing server 30 according to the present embodiment is now described. FIG. 12 is a flowchart illustrating the procedure of learning by the information processing server 30.

Referring to FIG. 12, the communication unit 360 of the information processing server 30 according to the present embodiment first receives user's speech information and sensor information from the information processing terminal 20 or the like (S1201).

Further, the communication unit 360 receives the service information from the external service 40 (SI202). Moreover, the reception of the speech information and the sensor information in step S1201 and the reception of the service information in step SI202 can be performed in an order different from that illustrated in FIG. 12, or can be performed simultaneously. In addition, the reception of only one of the respective pieces information in step S1201 and step S1202 can be performed.

Then, the behavior estimation unit 310 estimates the user's behavior on the basis of the respective pieces information received in step S1201 and step S1202 (S1203).

Then, the communication unit 360 acquires image information relating to the user from the information processing terminal 20 (SI204).

Then, the wearing determination unit 320 analyzes the image information acquired in step S1204 and determines whether or not the assistive device 10 is worn by the user (S1205).

Moreover, the acquisition of the image information in step S1204 and the determination as to whether or not the assistive device 10 is worn on the basis of the image analysis in step S1205 are not necessarily executed. The communication unit 360 can acquire the user's explicit input, instead of the image information, as to whether or not the assistive device 10 is worn.

Then, the learning unit 340 performs the learning by associating the behavior estimated in step S1203 with the determination as to whether or not the assistive device 10 is worn in step S1205, and stores the learning result in the learning DB 350 (S1206).

### <<1.11. Procedure of re-learning based on feedback>>

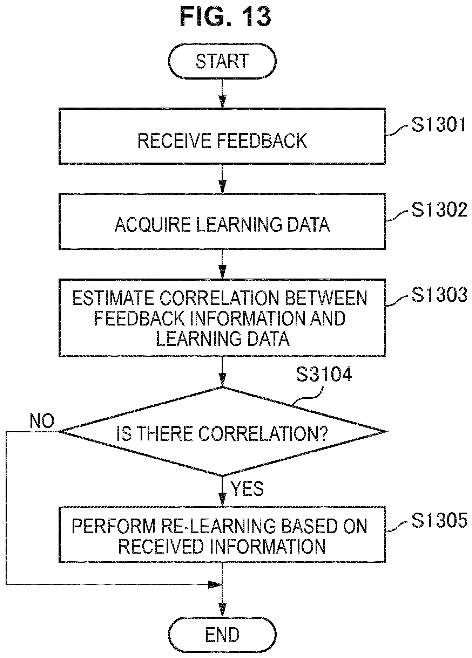

The procedure of re-learning based on feedback according to the present embodiment is now described. The information processing server 30 according to the present embodiment is capable of performing the re-learning of the behavior and whether or not the assistive device 10 is worn on the basis of feedback from the user for the output information. FIG. 13 is a flowchart illustrating the procedure of re-learning based on the feedback by the information processing server 30.

Referring to FIG. 13, the communication unit 360 of the information processing server 30 first receives the feedback from the user for the output information from the information processing terminal 20 (S1301). Here, the feedback described above can include explicit input information by the user. Examples of the explicit input information include utterance "I'm wearing eyeglasses now" by the user, text input indicating whether or not the assistive device 10 is worn, a button operation, or the like.

Further, the feedback can include implicit feedback such as a change in font size or volume by the user, user's utterance "large", or the like. In addition, the information processing server 30 can cause the information processing terminal 20 to ask a question as an output such as "Do you wear eyeglasses now?", thereby increasing opportunities to receive the feedback.

Then, the learning unit 340 acquires, from the learning DB 350, learning data relating to the output control subjected to feedback (S1302).

Subsequently, the learning unit 340 estimates the correlation between the feedback acquired in step S1301 and the learning data acquired in step S1302 (S1303). In this event, the learning unit 340 can estimate the correlation, in one example, from a trend depending on day of week, behavior before and after by the user, or the like.

Subsequently, the learning unit 340 determines whether or not there is a correlation between the feedback acquired in step S1301 and the learning data acquired in step S1302 (S1304). In other words, the learning unit 340 according to the present embodiment is capable of determining whether the received feedback is an exceptional case or is accompanied by regularity.

Here, in the case where the learning unit 340 determines that there is no correlation between the feedback acquired in step S1301 and the learning data acquired in step S1302 (No in S1304), the information processing server 30 ends a series of processing relating to re-learning.

On the other hand, in the case where the learning unit 340 determines that there is a correlation between the feedback acquired in step S1301 and the learning data acquired in step S1302 (Yes in S1304), the learning unit 340 executes the re-learning based on the received information and stores the learning result in the learning DB 350 (S1305).

### <2. Hardware configuration example>

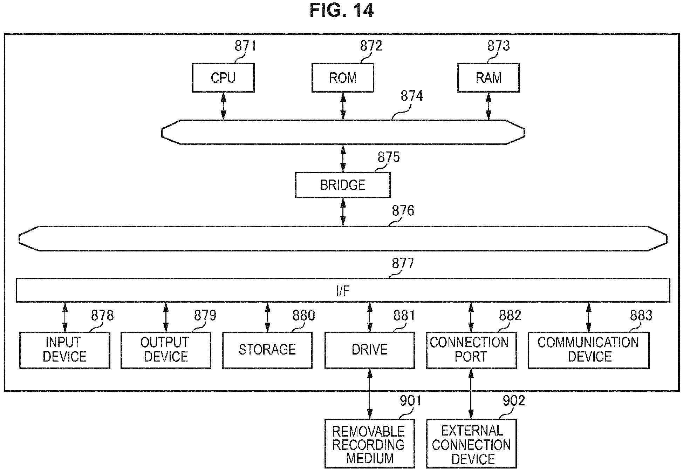

An example of the hardware configuration common to the information processing terminal 20 and the information processing server 30 according to the present disclosure is now described. FIG. 14 is a block diagram illustrating an example of the hardware configuration of the information processing terminal 20 and the information processing server 30 according to the present disclosure.

Referring to FIG. 14, the information processing terminal 20 and the information processing server 30 each includes, in one example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Moreover, the hardware configuration shown here is illustrative, and some of components can be omitted. In addition, a component other than the components shown here can be further included.

### (CPU 871)

The CPU 871 functions as, in one example, an arithmetic processing unit or a control device, and controls some or all of the operations of each component on the basis of various programs recorded in the ROM 872, the RAM 873, the storage 880, or a removable recording medium 901.

### (ROM 872 and RAM 873)

The ROM 872 is a means for storing programs loaded into the CPU 871, data used for operation, or the like. The RAM 873 temporarily or permanently stores, in one example, a program to be loaded into the CPU 871, various parameters appropriately changing in executing the program, or the like.

### (Host bus 874, bridge 875, external bus 876, and interface 877)

The CPU 871, the ROM 872, and the RAM 873 are mutually connected via, in one example, the host bus 874 capable of high-speed data transmission. On the other hand, the host bus 874 is connected to the external bus 876 having a relatively low data transmission rate, in one example, via the bridge 875. In addition, the external bus 876 is connected to various components via the interface 877.

### (Input device 878)

Examples of the input device 878 include a mouse, a keyboard, a touch panel, buttons, a switch, a lever, or the like. Furthermore, examples of the input device 878 include a remote controller capable of transmitting a control signal using infrared rays or other radio waves (hereinafter referred to as a remote controller). In addition, the input device 878 includes a speech input device such as a microphone.

### (Output device 879)

The output device 879 is a device capable of visually or audibly notifying the user of the acquired information, which includes a display device such as a cathode ray tube (CRT), an LCD, or an organic EL, an audio output device such as a loudspeaker or a headphone, a printer, a mobile phone, a facsimile, or the like.

### (Storage 880)

The storage 880 is a device used to store various types of data. Examples of the storage 880 include a magnetic storage device such as hard disk drives (HDDs), a semiconductor storage device, an optical storage device, a magneto-optical storage device, or the like.

### (Drive 881)

The drive 881 is a device that reads information recorded on the removable recording medium 901 such as a magnetic disk, an optical disk, a magneto-optical disk, or semiconductor memory or writes information to the removable recording medium 901.

### (Removable recording medium 901)

Examples of the removable recording medium 901 include a DVD medium, a Blu-ray (registered trademark) medium, an HD DVD medium, various kinds of semiconductor storage media, or the like. Of course, the removable recording medium 901 is preferably, in one example, an IC card or an electronic device mounted with a contactless IC chip.

### (Connection port 882)

The connection port 882 is a port used for connection with an external connection device 902, such as a universal serial bus (USB) port, an IEEE 1394 port, a small computer system interface (SCSI), an RS-232C port, or an optical audio terminal.

### (External connection device 902)

Examples of the external connection device 902 include a printer, a portable music player, a digital camera, a digital video camera, an IC recorder, or the like.

### (Communication device 883)

The communication device 883 is a communication device used for connection with a network, and examples thereof include a communication card for wired or wireless LAN, Bluetooth (registered trademark), or wireless USB (WUSB), a router for optical communication, a router for asymmetric digital subscriber line (ADSL), or a modem for various communications.

### <3. Concluding remarks>

As described above, the information processing server 30 according to the present embodiment has a function of estimating the user's behavior on the basis of the sensor information or the information acquired from the external service 40 and performing the learning by associating the behavior with whether or not the assistive device 10 is worn. In addition, the information processing server 30 is capable of determining whether or not the user wears the assistive device 10 on the basis of the estimated behavior and the learning result and performing the output control based on the determination. Such a configuration makes it possible to more flexibly determine whether or not the user wears the assistive device.

The preferred embodiment(s) of the present disclosure has/have been described above with reference to the accompanying drawings, whilst the present disclosure is not limited to the above examples. A person skilled in the art can find various alterations and modifications within the scope of the appended claims, and it should be understood that they will naturally come under the technical scope of the present disclosure.

In one example, although the above-described embodiments are mainly describes the case where the assistive device 10 is a vision correction instrument or a hearing aid instrument, the present technology is not limited to these examples. The assistive device 10 according to the present disclosure can be, in one example, a mobility aid device such as wheelchairs or walking assistant canes. The information processing server 30 according to the present disclosure is also capable of determining whether or not the user wears the mobility aid and controlling the information output by the information processing terminal 20. This function makes it possible, in the case where the user is difficult to move, to present the output information to the user who is located at a place distant from the information processing terminal 20, in one example, by adjusting the output intensity of the output information.

Further, in one example, the information processing server 30 according to the present disclosure can determine whether or not a device other than the assistive device 10 is worn and can perform output control based on the determination. In the information processing server 30 according to the present disclosure, in one example, in a case where a user wears an earphone, a headphone, or the like, it is possible to perform control such as giving priority to visual information. According to the present technology, it is possible to determine whether or not various devices are worn from the user's behavior and perform output control based on the determination.

Further, the respective steps in the processing of the information processing server 30 in this specification are not necessarily executed in chronological order in accordance with the order illustrated in the flowcharts. In one example, the respective steps in the processing of the information processing server 30 can be processed in the order different from the order illustrated in the flowcharts, or can also be processed in parallel.

Further, the effects described in this specification are merely illustrative or exemplified effects, and are not limitative. That is, with or in the place of the above effects, the technology according to the present disclosure can achieve other effects that are clear to those skilled in the art from the description of this specification.

Additionally, the present technology may also be configured as below.
(1) An information processing apparatus including:
   a determination unit configured to determine whether or not an assistive device is being worn by a user; and
   an output control unit configured to perform control of an output mode on the basis of determination by the determination unit as to whether or not the assistive device is being worn,
   in which the determination unit determines whether or not the assistive device is being worn on the basis of estimated behavior of the user.
(2) The information processing apparatus according to (1),
   in which the output control unit changes an output mode on when the determination unit determines that the user who habitually wears the assistive device is not wearing the assistive device.
(3) The information processing apparatus according to (1) or (2),
   in which the determination unit determines that the user is not wearing the assistive device on the basis of estimation of behavior of the user learned in association with a state where the assistive device is not being worn.
(4) The information processing apparatus according to any of (1) to (3),
   in which the assistive device includes at least any of a vision correction instrument or a hearing aid instrument.
(5) The information processing apparatus according to any of (1) to (4),
   in which the determination unit determines whether or not the assistive device is being worn on the basis of behavior estimated from utterance of the user.
(6) The information processing apparatus according to any of (1) to (5),
   in which the determination unit determines whether or not the assistive device is being worn on the basis of behavior estimated from information acquired from an external service.
(7) The information processing apparatus according to any of (1) to (6),
   in which the determination unit determines whether or not the assistive device is being worn on the basis of behavior estimated from acquired sensor information.
(8) The information processing apparatus according to any of (1) to (7),
   in which the output control unit controls output intensity relating to information output on the basis of determination that the user is not wearing the assistive device.
(9) The information processing apparatus according to any of (1) to (8),
   in which the output control unit changes a modal relating to information output on the basis of determination that the user is not wearing the assistive device.
(10) The information processing apparatus according to any of (1) to (9),
   in which the output control unit transfers output information to an external device on the basis of determination that the user is not wearing the assistive device.
(11) The information processing apparatus according to any of (1) to (10),
   in which, in a case where the determination unit determines whether or not the assistive devices are being worn by a plurality of users, the output control unit changes the output mode on the basis of determination that a user who is not wearing the assistive device is present.
(12) The information processing apparatus according to any of (1) to (11),
   in which, in a case where the determination unit determines whether or not the assistive devices are being worn by a plurality of users, the output control unit controls the output mode on the basis of whether or not the assistive device is being worn by a user who is a target of output information.
(13) The information processing apparatus according to any of (1) to (12),
   in which, in a case where the determination unit determines whether or not the assistive devices are being worn by a plurality of users, the output control unit controls a plurality of output modes corresponding to the plurality of users.
(14) The information processing apparatus according to any of (1) to (13),
   in which the output control unit performs control of the output mode on a further basis of an acquired environmental condition.
(15) The information processing apparatus according to (14),
   in which the output control unit selects an output mode relating to visual information on the basis of the environmental condition indicating a request for quiet environment.
(16) The information processing apparatus according to (14) or (15),
   in which the environmental condition includes estimated behavior of a third party.
(17) The information processing apparatus according to any of (1) to (16), further including:
   an estimation unit configured to estimate behavior of the user.
(18) An information processing apparatus including:
   a sensor unit configured to collect information used for estimation of behavior of a user; and
   an output unit configured to perform information output to the user,
   in which the output unit performs information output corresponding to an output mode controlled on the basis of determination of whether or not an assistive device is being worn by the user, the determination being performed from information collected from the sensor unit or an external service.
(19) The information processing apparatus according to (18),
   in which the output unit performs information output corresponding to an output mode changed on the basis of determination that the user who habitually wears the assistive device is not wearing the assistive device.
(20) The information processing apparatus according to any of (18) and (19),
   in which the output unit performs information output relating to one or both of visual information and speech information corresponding to the output mode.

### Reference Signs List

- 10: assistive device
- 20: information processing terminal
- 210: sensor unit
- 220: output unit
- 230: server communication unit
- 30: information processing server
- 310: behavior estimation unit
- 320: wearing determination unit
- 330: output control unit
- 340: learning unit
- 350: learning DB
- 360: communication unit
- 40: external service
- 50: network
- 60: external device

## Claims

1. An information processing apparatus comprising:
a determination unit configured to determine whether or not an assistive device is being worn by a user; and
an output control unit configured to perform control of an output mode on a basis of determination by the determination unit as to whether or not the assistive device is being worn,
wherein the determination unit determines whether or not the assistive device is being worn on a basis of estimated behavior of the user.

2. The information processing apparatus according to claim 1,
wherein the output control unit changes an output mode on when the determination unit determines that the user who habitually wears the assistive device is not wearing the assistive device.

3. The information processing apparatus according to claim 1,
wherein the determination unit determines that the user is not wearing the assistive device on a basis of estimation of behavior of the user learned in association with a state where the assistive device is not being worn.

4. The information processing apparatus according to claim 1,
wherein the assistive device includes at least any of a vision correction instrument or a hearing aid instrument.

5. The information processing apparatus according to claim 1,
wherein the determination unit determines whether or not the assistive device is being worn on a basis of behavior estimated from utterance of the user.

6. The information processing apparatus according to claim 1,
wherein the determination unit determines whether or not the assistive device is being worn on a basis of behavior estimated from information acquired from an external service.

7. The information processing apparatus according to claim 1,
wherein the determination unit determines whether or not the assistive device is being worn on a basis of behavior estimated from acquired sensor information.

8. The information processing apparatus according to claim 1,
wherein the output control unit controls output intensity relating to information output on a basis of determination that the user is not wearing the assistive device.

9. The information processing apparatus according to claim 1,
wherein the output control unit changes a modal relating to information output on a basis of determination that the user is not wearing the assistive device.

10. The information processing apparatus according to claim 1,
wherein the output control unit transfers output information to an external device on a basis of determination that the user is not wearing the assistive device.

11. The information processing apparatus according to claim 1,
wherein, in a case where the determination unit determines whether or not the assistive devices are being worn by a plurality of users, the output control unit changes the output mode on a basis of determination that a user who is not wearing the assistive device is present.

12. The information processing apparatus according to claim 1,
wherein, in a case where the determination unit determines whether or not the assistive devices are being worn by a plurality of users, the output control unit controls the output mode on a basis of whether or not the assistive device is being worn by a user who is a target of output information.

13. The information processing apparatus according to claim 1,
wherein, in a case where the determination unit determines whether or not the assistive devices are being worn by a plurality of users, the output control unit controls a plurality of output modes corresponding to the plurality of users.

14. The information processing apparatus according to claim 1,
wherein the output control unit performs control of the output mode on a further basis of an acquired environmental condition.

15. The information processing apparatus according to claim 14,
wherein the output control unit selects an output mode relating to visual information on a basis of the environmental condition indicating a request for quiet environment.

16. The information processing apparatus according to claim 14,
wherein the environmental condition includes estimated behavior of a third party.

17. The information processing apparatus according to claim 1, further comprising:
an estimation unit configured to estimate behavior of the user.

18. An information processing apparatus comprising:
a sensor unit configured to collect information used for estimation of behavior of a user; and
an output unit configured to perform information output to the user,
wherein the output unit performs information output corresponding to an output mode controlled on a basis of determination of whether or not an assistive device is being worn by the user, the determination being performed from information collected from the sensor unit or an external service.

19. The information processing apparatus according to claim 18,
wherein the output unit performs information output corresponding to an output mode changed on a basis of determination that the user who habitually wears the assistive device is not wearing the assistive device.

20. The information processing apparatus according to claim 18,
wherein the output unit performs information output relating to one or both of visual information and speech information corresponding to the output mode.
